# EUROPÄISCHE PATENTSCHRIFT

(11) **EP 3 853 493 B1**
(45) Veröffentlichungstag und Bekanntmachung des Hinweises auf die Patenterteilung: **22.05.2024**
(21) Anmeldenummer: 19773345.4
(22) Anmeldetag: 10.09.2019
(51) Int. Cl.: F16D 65/18, F16D 65/84

(54) **SCHEIBENBREMSE MIT EINER BLECHANORDNUNG FÜR EIN FAHRZEUG SOWIE BLECHANORDNUNG FÜR EINE SCHEIBENBREMSE**
DISC BRAKE HAVING A SHEET METAL ARRANGEMENT FOR A VEHICLE, AND SHEET METAL ARRANGEMENT FOR A DISC BRAKE
FREIN À DISQUE AYANT UN ENSEMBLE DE TÔLES POUR UN VÉHICULE ET ENSEMBLE DE TÔLES POUR FREIN À DISQUE

(30) Priorität: 17.09.2018 DE 102018122726
(43) Veröffentlichungstag der Anmeldung: 28.07.2021
(73) Patentinhaber: BPW Bergische Achsen KG, 51674 Wiehl (DE)
(72) Erfinder: ABT, Christian, 51643 Gummersbach (DE); PANTEL, Stefan, 53783 Eitorf (DE)
(74) Vertreter: DREISS Patentanwälte PartG mbB
(86) Internationale Anmeldenummer: PCT/DE2019/100806
(87) Internationale Veröffentlichungsnummer: WO 2020/057694

(56) Entgegenhaltungen:
- EP-A1- 0 362 546
- WO-A1-2010/049133
- DE-A1- 3 143 165
- DE-U1-202006 021 267

## Beschreibung

Die Erfindung betrifft eine Scheibenbremse für ein Fahrzeug gemäß dem Oberbegriff des Anspruchs 1.

Die Erfindung betrifft ferner nach Anspruch 7 eine Blechanordnung für eine solche Scheibenbremse, umfassend eine zentrale Blechplatte und einen koaxial dazu angeordneten sowie stoffschlüssig damit verbundenen Blechring, der zum Schutz vor Wärmestrahlung dient.

Nutzfahrzeuge, insbesondere Nutzfahrzeuganhänger und sogenannte Sattelauflieger sind in der Regel modulartig aufgebaut und an ein darauf aufgenommenes Chassis angepasst. Die Fahrwerksanordnung des Nutzfahrzeugs umfasst zumindest ein Achsaggregat, wobei das zumindest eine Achsaggregat aus mehreren Modulen zusammengesetzt ist. Insbesondere ist das Achsaggregat aus der eigentlichen Radachse mit den Fahrzeugrädern, den Bremsen, den Elementen der Fahrzeugfederung und den Stoßdämpfern zusammengesetzt. Bei der Herstellung einer Fahrwerksanordnung für einen Nutzfahrzeug-Sattelauflieger, werden beispielsweise drei Achsaggregate an dem Fahrzeugrahmen des Nutzfahrzeug-Sattelaufliegers befestigt, was zumeist durch Verschrauben oder teils auch durch Verschweißen erfolgt.

Aus der DE 21 34 940 A1 geht eine Schutzkappe für einen Kolben einer Teilbelag-Scheibenbremse mit einem Ring aus elastischem Material hervor. Der Ring ist am äußeren Ringumfang mit dem Bremszylindergehäuse fest verbindbar. Ferner weist der Ring eine Ringfalte auf, die in einen zwischen der Zylinderwand und einem ringförmigen Stufenabsatz am scheibenseitigen Kolbenende ausgebildeten Ringraum passt, und dessen Innenrand am Kolben abgestützt ist. Die Öffnung des Ringes ist mit einer rundum mit dessen Innenrand dicht verbundenen Blechscheibe versehen. Ferner ist ein Blechring an der Blechscheibe angeschweißt, wobei der Blechring den elastischen Ring bis zu dessen äußeren Rand überdeckt und gegen die Wärmestrahlung einer Bremsbacke schützt.

Eine gattungsgemäße Scheibenbremse und Blechanordnung für eine Scheibenbremse ist aus der DE 20 2006 021 267 U1 bekannt. Darin vorgeschlagen wird ein den Faltenbalg schützendes Schirmelement in Gestalt eines Trichters. Da im Bereich der den Bremsdruck übertragenden Elemente die Trichterform eher ungünstig ist, sind an der Rückseite der Trägerplatte des Bremsbelags zusätzliche Druckstücke befestigt. Die zusätzlichen Druckstücke bieten aufgrund ihrer Dicke den Vorteil, dass keine Bremskräfte das trichterförmige Schirmelement beeinflussen. Die zusätzlichen Druckstücke führen jedoch zu einer vergrößerten Baulänge beim Zuspannen der Scheibenbremse.

Auch die DE 31 43 165 A1 und die WO 2010/049133 A1 offenbaren jeweils ringförmige metallische Elemente im Bereich zwischen einem zu schützenden Faltenbalg und dem unmittelbar benachbarten Bremsbelag der Scheibenbremse.

Der Erfindung liegt die **Aufgabe** zugrunde, eine verbesserte Blechanordnung für eine Scheibenbremse sowie eine verbesserte Scheibenbremse mit einer Blechanordnung zu schaffen.

Zur Lösung wird eine Scheibenbremse mit den Merkmalen des Patentanspruchs 1 sowie eine Blechanordnung mit den Merkmalen des Patentanspruchs 7 vorgeschlagen. Weitere vorteilhafte Ausführungsformen sind den abhängigen Ansprüchen zu entnehmen.

Eine erfindungsgemäße Scheibenbremse für ein Fahrzeug weist die Merkmale des Anspruchs 1 auf.

Unter der Zuspanneinrichtung werden jene Komponenten der Scheibenbremse verstanden, mittels denen die von einem Kraftglied, z. B. einem Druckluftzylinder, erzeugte Antriebskraft in eine an den Bremsbelägen wirkende Zuspannkraft überführt wird. Bei druckluftbetätigten Scheibenbremsen ist Bestandteil dieser Zuspanneinrichtung ein schwenkbar in dem Bremssattelgehäuse gelagerter, druckverstärkender Bremshebel.

Eine erfindungsgemäße Blechanordnung für eine Scheibenbremse eines Fahrzeugs weist die Merkmale des Anspruchs 7 auf.

Mit anderen Worten ist die mindestens eine Aussparung dazu vorgesehen, eine Strukturschwächung in dem Blechring zu erzeugen, wobei die Biegesteifigkeit des Blechrings dadurch verringert wird und somit der Blechring leichter elastisch verformt werden kann. Durch die Verringerung der Biegesteifigkeit des Blechrings wird die stoffschlüssige Verbindung bzw. die Verbindungsstelle zwischen der Blechplatte und dem Blechring vor erhöhter Krafteinwirkung geschützt, indem eine in den Blechring eingeleitete Kraft in eine Verformung des Blechrings umgewandelt wird. Ferner kann durch gezielte Werkstoffauswahl des Blechrings sowohl die Biegesteifigkeit als auch die Eigenschaften einer Wärmedämmung bzw. Wärmereflektion gezielt eingestellt werden, um den Schutz des Faltenbalgs zu erhöhen. Vorzugsweise ist der Blechring aus einem Federstahl ausgebildet. Bevorzugt kann der Blechring zumindest teilweise eine wärmeresistente, insbesondere wärmereflektierende Beschichtung aufweisen.

Insbesondere sind die Blechplatte und der Blechring durch Schweißen oder Kleben miteinander verbunden, wobei die Schweißnaht bzw. Klebefuge vorzugsweise umlaufend ausgebildet ist. Alternativ können mehrere Schweißnahtabschnitte bzw. Klebefugenabschnitte gleichmäßig über den Umfang verteilt zwischen Blechplatte und Blechring angeordnet sein, um die Blechanordnung auszubilden.

Vorzugsweise weist der Blechring einstückig einen zylindrischen Abschnitt sowie einen ringscheibenförmigen Abschnitt auf. Der zylindrische Abschnitt kann im Wesentlichen senkrecht zum ringscheibenförmigen Abschnitt ausgebildet sein. Insbesondere wird der Blechring durch Kaltumformen hergestellt, wobei der zylindrische Abschnitt vorzugsweise tiefgezogen wird. Der zylindrische Abschnitt weist aufgrund seiner Funktion insbesondere eine höhere Biegesteifigkeit als der ringscheibenförmige Abschnitt auf, denn der zylindrische Abschnitt ist zur Aufnahme des Blechrings vorgesehen.

Vorzugsweise ist zwischen dem zylindrischen Abschnitt und einem darin angeordneten Längsabschnitt des Druckstücks ein umlaufender Ringspalt ausgebildet. Mithin stützt sich der zylindrische Abschnitt des Blechrings nicht an einer Umfangsfläche des Druckstücks ab.

Bevorzugt ist der Faltenbalg mittels eines Spannrings an dem zylindrischen Abschnitt des Blechrings befestigt. Somit kommt der Faltenbalg radial an einer Außenumfangsfläche des zylindrischen Abschnitts zur Anlage, wobei der Spannring den zweiten Endbereich des Faltenbalgs am zylindrischen Abschnitt des Blechrings positionsfest, mithin sowohl gegen eine axiale Verschiebung als auch gegen Rotation sichert. Insbesondere ist ein weiterer Spannring vorgesehen, der einen ersten Endbereich des Faltenbalgs am Bremssattelgehäuse sichert. Bevorzugt ist zwischen dem Bremssattelgehäuse und dem Faltenbalg ein ringförmiges Aufnahmeblech in einer Öffnung des Bremssattelgehäuses angeordnet.

Ferner bevorzugt ist zwischen dem Faltenbalg und dem ringscheibenförmigen Abschnitt eine Scheibe mit Antihaftwirkung an dem ringscheibenförmigen Abschnitt angeordnet. Mithin ist die Scheibe zumindest teilweise antihaftend ausgebildet bzw. weist antihaftende Eigenschaften auf. Beispielsweise weist zumindest eine zum Faltenbalg gerichtete Stirnfläche der Scheibe eine antihaftende Beschichtung aus. Vorzugsweise weist zumindest eine zum ringscheibenförmigen Abschnitt gerichtete Stirnfläche der Scheibe eine wärmeresistente, insbesondere wärmereflektierende Beschichtung auf. Insbesondere ist die Scheibe aus einem Kunststoff ausgebildet. Vorzugsweise besteht die Scheibe oder die Beschichtung an der Scheibe zumindest teilweise oder vollständig aus Polytetrafluorethylen (PTFE). Somit dient die Scheibe zum einen dazu, ein Anhaften bzw. Ankleben des Faltenbalgs bei einem Kontakt zu verhindern und zum anderen dazu, die Wärmestrahlung in Richtung Faltenbalg weiter zu verringern.

Insbesondere ist die Scheibe mit Antihaftwirkung stoffschlüssig und/oder formschlüssig mit dem Blechring verbunden. Beispielsweise ist zumindest der ringscheibenförmige Abschnitt derart mit einem die Scheibe ausbildenden Kunststoff beschichtet, umspritzt oder umgossen, dass zumindest die zum Faltenbalg gerichtete Stirnfläche antihaftende Eigenschaften aufweist.

Gemäß einer bevorzugten Ausführungsform ist der ringscheibenförmige Abschnitt gegenüber der Blechplatte axial in Richtung zu dem Faltenbalg zurückversetzt angeordnet. Mit anderen Worten ist der ringscheibenförmige Abschnitt in einer ersten Ebene und die Blechplatte in einer zweiten Ebene angeordnet, wobei die beiden Ebenen im Wesentlichen parallel und somit nicht identisch ausgebildet sind. Mithin sind die beiden Ebenen voneinander durch einen Spalt beabstandet, wobei der axiale Abstand zwischen den beiden Ebenen den Spalt bzw. Versatz zwischen dem ringscheibenförmigen Abschnitt und der Blechplatte darstellt. Dieser Spalt verhindert unter Normalbedingungen einen Kontakt des ringscheibenförmigen Abschnitts mit dem ersten Bremsbelag.

Mehrere Aussparungen sind in Umfangsrichtung gleichmäßig verteilt an dem ringscheibenförmigen Abschnitt ausgebildet. Die Aussparungen sind in Umfangsrichtung gleichmäßig verteilt aneinander angrenzend auf mindestens einer Kreisbahn angeordnet. Die gleichmäßige Verteilung der Aussparungen an den ringscheibenförmigen Abschnitt ermöglicht eine homogene und somit gleichmäßige Einstellung der Biegesteifigkeit des ringscheibenförmigen Abschnitts.

Vorzugsweise sind die Aussparungen langlochförmig oder schlitzförmig ausgebildet. Beispielsweise können die Aussparungen unterschiedlich groß bzw. lang ausgebildet sein. Bevorzugt sind alle Aussparungen identisch zueinander ausgebildet.

Ferner bevorzugt erstrecken sich die Aussparungen überwiegend in Umfangsrichtung.

Insbesondere sind die Aussparungen mit dem die Scheibe ausbildenden Kunststoff gefüllt. Mit anderen Worten wird zumindest der ringscheibenförmige Abschnitt des Blechrings derart mit Kunststoff umspritzt, dass der Kunststoff in die Aussparungen eindringt und diese verschließt. Die Flexibilität des ringscheibenförmigen Abschnitts bleibt dabei erhalten.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigen:
- Fig. 1: eine vereinfachte schematische Schnittdarstellung einer teilweise dargestellten erfindungsgemäßen Scheibenbremse mit einer erfindungsgemäßen Blechanordnung, wobei ein Bremsbelag der Scheibenbremse noch nicht abgenutzt ist;
- Fig. 2: eine vereinfachte schematische Schnittdarstellung der teilweise dargestellten erfindungsgemäßen Scheibenbremse gemäß Fig. 1, wobei der Bremsbelag der Scheibenbremse stark abgenutzt ist;
- Fig. 3: eine vereinfachte schematische Stirnseitenansicht der erfindungsgemäßen Blechanordnung gemäß Fig. 1 und Fig. 2;
- Fig. 4: eine vereinfachte schematische Stirnseitenansicht einer nicht-erfindungsgemäßen Blechanordnung; und
- Fig. 5: eine vereinfachte schematische Stirnseitenansicht einer erfindungsgemäßen Blechanordnung.

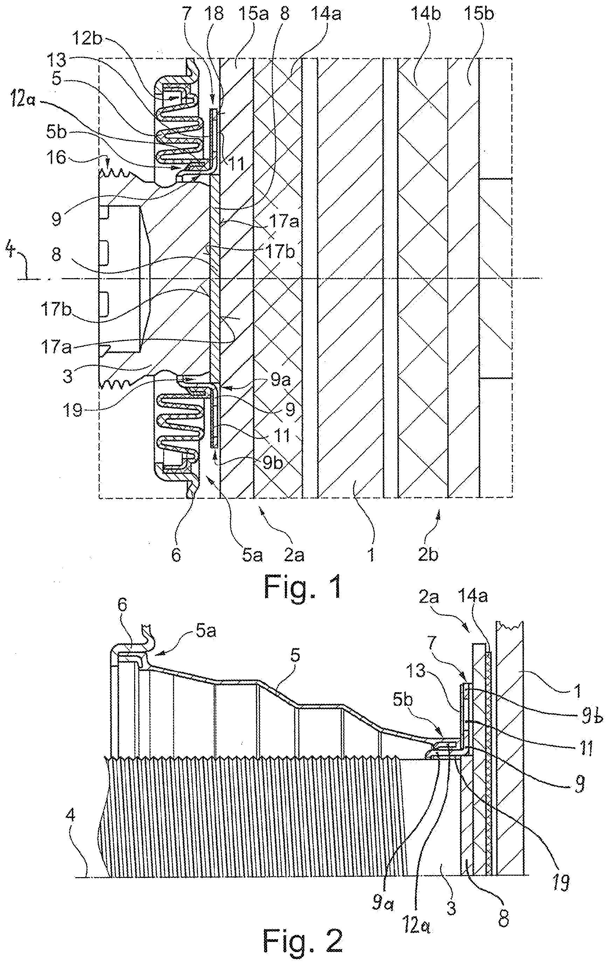

Gemäß Fig. 1 ist eine Scheibenbremse, insbesondere eine pneumatische Scheibenbremse für ein Fahrzeug, insbesondere für ein Nutzfahrzeug dargestellt. Bestandteile der Scheibenbremse sind ein nicht dargestellter Bremssattel, welcher als Festsattel oder als Schwimmsattel gestaltet sein kann, sowie eine Bremsscheibe 1, zu deren beiden Seiten Bremsbeläge 2a, 2b in dem Bremssattel angeordnet sind. Die Bremsbeläge 2a, 2b bestehen jeweils aus einem Reibbelag 14a, 14b sowie einer rückseitigen Belagträgerplatte 15a, 15b. Bei einer Betätigung der Scheibenbremse kommen die Reibbeläge 14a, 14b an der Bremsscheibe 1 zur Anlage um ein Reibmoment zum Abbremsen des Fahrzeugs zu erzeugen. Der nicht dargestellte Bremssattel besteht in üblicher Bauweise aus einer die Bremsscheibe 1 U-förmig umgreifenden Bremssattelbrücke sowie einem Bremssattelgehäuse 6, von dem in Fig. 1 und Fig. 2 nur ein Blechformteil wiedergegeben ist. In dem Bremssattelgehäuse 6 des Bremssattels befindet sich eine Zuspanneinrichtung der Scheibenbremse.

Bestandteil der Scheibenbremse ist außerdem eine Nachstelleinrichtung. Diese dient der Kompensation des infolge des fortschreitenden Verschleißes an den Bremsbelägen 2a, 2b und der Bremsscheibe 1 sich vergrößernden Lüftspiels der Scheibenbremse. Mit dem Nachstellen der Scheibenbremse kommt es im Laufe der Zeit zu einer Verlagerung eines Druckstücks 3, welches Bestandteil der Zuspanneinrichtung ist, entlang seiner Längsmittelachse 4 zu der Bremsscheibe 1 hin. Dies wird insbesondere durch einen Vergleich von Fig. 1 und Fig. 2 deutlich.

Gemäß Fig. 1 sind die Bremsbeläge 2a, 2b der Scheibenbremse noch nicht abgenutzt, wobei das Druckstück 3 vollständig eingefahren ist. Nach Fig. 2 sind die Bremsbeläge 2a, 2b der Scheibenbremse stark abgenutzt, wobei das Druckstück 3 vollständig ausgefahren ist.

Das Druckstück 3 ist im Wesentlichen rotationssymmetrisch ausgebildet. Auf seiner Außenseite ist es auf einem Teil seiner Länge mit einem Außengewinde 16 versehen und bildet zusammen mit einer - hier nicht dargestellten - Gewindemutter einen Gewindetrieb aus. Bei der Nachstellung erfolgt beispielsweise ein Verdrehen des als Gewindespindel ausgebildeten Druckstücks 3, wobei das Druckstück 3 ferner eine translatorische Bewegung entlang der Längsmittelachse 4 zur Bremsscheibe 1 hin erfährt, um das Lüftspiel zu korrigieren. Die Gewindemutter ist stationär festgelegt. Da sich das Druckstück 3 mit zunehmender Belagabnutzung aus dem Bremssattelgehäuse 6 heraus bewegt, bedarf es eines dieser Bewegungsmöglichkeit gerecht werdenden Schutzes des Inneren des Bremssattelgehäuses 6 gegen äußere Verunreinigungen. Denn gerade im Bereich der Bremsbeläge 2a, 2b herrscht eine starke staub- und feuchtigkeitsbeladene Atmosphäre. Aus diesem Grunde ist das Bremssattelgehäuse 6 zu dem fahrzeuginneren, ersten Bremsbelag 2a hin mit einer Abdichtung versehen. Diese setzt sich im Wesentlichen zusammen aus einer in eine Öffnung des Bremssattelgehäuses 6 eingesetzten verformbaren Faltenbalg 5 und einer den Faltenbalg 5 zur Bremsscheibe 1 hin verschließenden Blechanordnung 7. Der aus Gummi oder einem Elastomer bestehende Faltenbalg 5 ist mit einem ersten Endbereich 5a verdrehsicher am Bremssattelgehäuses 6 befestigt. Diese Befestigung erfolgt vorliegend mittels eines Spannrings 12b, welcher den ersten Endbereich 5a gegen die umgebende Öffnung des Bremssattelgehäuses 6 verspannt. Mit seinem zweiten Endbereich 5b ist der Faltenbalg 5 über einen weiteren Spannring 12a verdrehsicher an der Blechanordnung 7 befestigt.

Die Blechanordnung 7 besteht aus einer Blechplatte 8 und einem koaxial zu der Blechplatte 8 angeordneten sowie stoffschlüssig mit der Blechplatte 8 verbundenen Blechring 9. Die Blechplatte 8 ist zwischen einer Stirnseite des Drückstücks 3 und dem ersten Bremsbelag 2a angeordnet und weist eine Bremsbelag-Druckfläche 17a sowie eine entgegengesetzt dazu ausgebildete Anlagefläche 17b für das Druckstück 3 auf. Die Bremsbelag-Druckfläche 17a kommt an der Belagträgerplatte 15a des ersten Bremsbelags 2a zur Anlage und die Anlagefläche 17b für das Druckstück 3 kommt an dem Druckstück 3 zur Anlage. Das Druckstück 3 ist in Längsrichtung frei beweglich gegenüber der Blechplatte 8 angeordnet.

Der Blechring 9 ist zwischen dem Faltenbalg 5 und dem ersten Bremsbelag 2a zum Schutz des Faltenbalgs 5 vor Wärmestrahlung, die durch Bremsvorgänge an den Bremsbelägen 2a, 2b und der Bremsscheibe 1 generiert wird, angeordnet.

Der Blechring 9 weist einen im wesentlichen zylindrischen Abschnitt 9a und einen flachen, ringscheibenförmigen Abschnitt 9b auf, wobei der zylindrische Abschnitt 9a im Wesentlichen senkrecht zum ringscheibenförmigen Abschnitt 9b ausgebildet und einteilig damit verbunden ist. Vorliegend ist der Faltenbalg 5 mittels Spannring 12a an dem zylindrischen Abschnitt 9a des Blechrings 9 befestigt. Der scheibenförmige Abschnitt 9b ist in radialer Verlängerung der Blechplatte 8 angeordnet. Zugleich ist er gegenüber der Blechplatte 8 axial in Richtung zu dem Faltenbalg 5 leicht zurückversetzt angeordnet, damit eine zum ersten Bremsbelag 2a gerichtete Hitzeschirmfläche 18 des scheibenförmigen Abschnitts 9b in der Regel nicht an dem ersten Bremsbelag 2a zur Anlage kommt.

Zwischen dem zylindrische Abschnitt 9a und einem Längsabschnitt des Druckstücks ist ein umlaufender Ringspalt 19 ausgebildet (Fig.2). Mithin stützt sich der zylindrische Abschnitt 9a des Blechrings 9 nicht außen auf der Umfangsfläche des Druckstücks 3 ab. Das Druckstück 3 kann somit bei der Nachstellung frei rotieren, ohne dass der Blechring 9 mit rotiert.

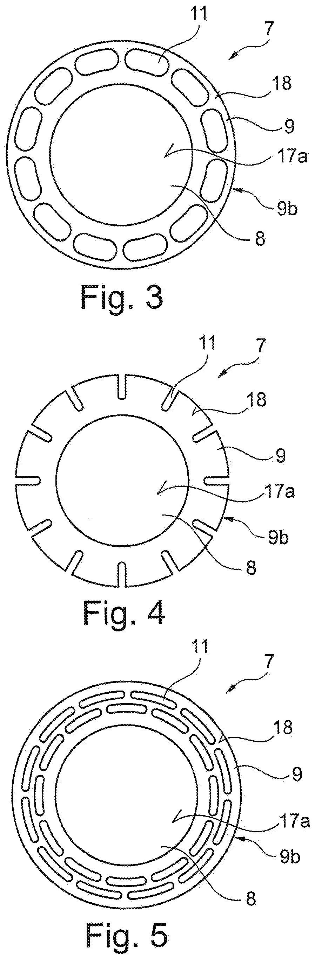

Unter Umständen kann es beispielsweise durch Verschmutzung zu einem Kontakt zwischen dem ersten Bremsbelag 2a und dem Blechring 9 kommen. Bei einem solchen Kontakt muss die Verbindungsstelle zwischen der Blechplatte 8 und dem Blechring 9 vor einer Belastung durch Verformung geschützt werden, um eine Schädigung der stoffschlüssigen Verbindung zu verhindern. Dazu weist der Blechring 9 mehrere Aussparungen 11 auf, die zur Verringerung seiner Biegesteifigkeit vorgesehen sind. Diese Aussparungen 11 sind in Fig. 3 besser dargestellt. Ferner sind in Fig. 4 und Fig. 5 weitere Ausführungsbeispiele für die Aussparungen 11 dargestellt. Unter Umständen kann es auch dazu kommen, dass sich der ringscheibenförmige Abschnitt 9b des Blechrings 9 bei Krafteinwirkung, beispielsweise durch Verschmutzung, aufgrund seiner verringerten Biegesteifigkeit derart elastisch verformt, dass dieser an dem Faltenbalg 5 zur Anlage kommt. Um den Faltenbalg 5 noch besser vor der Wärmestrahlung bei Bremsvorgängen zu schützen, bzw. um die auf den Faltenbalg 5 einwirkende Wärmestrahlung weiter zu verringern ist zwischen dem Faltenbalg 5 und dem scheibenförmigen Abschnitt 9b eine Scheibe 13 stirnseitig an dem ringscheibenförmigen Abschnitt 9b angeordnet. Diese Scheibe 13 ist vorliegend aus einem Kunststoff mit Antihaftwirkung ausgebildet, um zusätzlich ein Anhaften des Faltenbalgs 5 bei Kontakt mit der Scheibe 13 zu verhindern. Mit anderen Worten verringert die Scheibe 13 zum einen die Wärmestrahlung von dem ersten Bremsbelag 2a zum Faltenbalg 5 hin und ermöglicht zum anderen ein rückstandsloses Lösen des Faltenbalgs 5 nach einem Kontakt mit der Scheibe 13.

Gemäß Fig. 2 ist der Bremsbelag 2a der Scheibenbremse stark abgenutzt. Insbesondere wurden sowohl die Reibbeläge 14a, 14b, wobei vorliegend nur der erste Reibbelag 14a dargestellt ist, als auch die Bremsscheibe 1 durch den Gebrauch verschlissen. Deswegen ist das Druckstück 3 vollständig ausgefahren. Der Faltenbalg 5 ist ebenso vollständig ausgefahren. Dabei ist der erste Endbereich 5a des Faltenbalgs 5 an dem Bremssattelgehäuse 6 verblieben und der zweite Endbereich 5b des Faltenbalgs 5 wurde gemeinsam mit der Blechanordnung 7 und der Scheibe 13 von dem Druckstück 3 axial entlang der Längsmittelachse 4 verschoben.

Fig. 3 zeigt isoliert die Blechanordnung 7 gemäß Fig. 1 und Fig. 2, wobei die Ansicht stirnseitig auf die Bremsbelag-Druckfläche 17a der Blechplatte 8 und die Hitzeschirmfläche 18 des Blechrings 9 erfolgt. Von dem Blechring 9 ist aufgrund der stirnseitigen Darstellung nur der ringscheibenförmige Abschnitt 9b sichtbar. In dem ringscheibenförmigen Abschnitt 9b sind mehrere Aussparungen 11 in Umfangsrichtung gleichmäßig verteilt ausgebildet. Die Aussparungen 11 sind langlochförmig ausgebildet und erstrecken sich gebogen bzw. kurvig in Umfangsrichtung. Mit anderen Worten sind die Aussparungen 11 in Umfangsrichtung gleichmäßig verteilt aneinander angrenzend auf einer gemeinsamen Kreisbahn angeordnet.

Fig. 4 zeigt isoliert eine nicht-erfindungsgemäße Blechanordnung 7. Die Ansicht erfolgt stirnseitig auf die Bremsbelag-Druckfläche 17a der Blechplatte 8 und die Hitzeschirmfläche 18 des Blechrings 9. Von dem Blechring 9 ist aufgrund der stirnseitigen Darstellung nur der ringscheibenförmige Abschnitt 9b sichtbar. In dem ringscheibenförmigen Abschnitt 9b sind mehrere Aussparungen 11 in Umfangsrichtung gleichmäßig verteilt ausgebildet. Die Aussparungen 11 sind radiale Schlitze. Diese erstrecken sich in Radialrichtung vom Außenumfang des ringscheibenförmigen Abschnitts 9b nach innen. Für eine gute Elastizität und Biegefähigkeit beträgt die Länge der nach außen offenen Schlitze 11 mehr als die Hälfte der radialen Erstreckung des ringscheibenförmigen Abschnitts 9b.

Fig. 5 zeigt isoliert eine dritte Ausführungsform der Blechanordnung 7, wobei die Ansicht stirnseitig auf die Bremsbelag-Druckfläche 17a der Blechplatte 8 und die Hitzeschirmfläche 18 des Blechrings 9 erfolgt. Vom Blechring 9 ist aufgrund der stirnseitigen Darstellung nur der ringscheibenförmige Abschnitt 9b sichtbar. In dem ringscheibenförmigen Abschnitt 9b sind mehrere Aussparungen 11 in Umfangsrichtung gleichmäßig verteilt ausgebildet. Die Aussparungen 11 sind langlochförmig ausgebildet und erstrecken sich gebogen bzw. kurvig in Umfangsrichtung. Die Aussparungen 11 gemäß Fig. 5 sind schmaler ausgebildet als die Aussparungen 11 gemäß Fig. 3, wobei die Aussparungen 11 gemäß Fig. 5 auf zwei Kreisbahnen verteilt angeordnet sind. Die Aussparungen 11 auf der äußeren Kreisbahn sind in Umfangsrichtung geringfügig länger ausgebildet als die Aussparungen 11 auf der inneren Kreisbahn. Ferner sind die Aussparungen 11 auf der äußeren Kreisbahn phasenverschoben bzw. in Umfangsrichtung versetzt zu den Aussparungen 11 auf der inneren Kreisbahn ausgebildet.

### Bezugszeichenliste

- 1: Bremsscheibe
- 2a, 2b: Bremsbelag
- 3: Druckstück
- 4: Längsmittelachse
- 5: Faltenbalg
- 5a, 5b: Endbereich
- 6: Bremssattelgehäuse
- 7: Blechanordnung
- 8: Blechplatte
- 9: Blechring
- 9a: zylindrischer Abschnitt
- 9b: ringscheibenförmiger Abschnitt
- 10: Druckstück
- 11: Aussparung
- 12a, 12b: Spannring
- 13: Scheibe
- 14a, 14b: Reibbelag
- 15a, 15b: Belagträgerplatte
- 16: Außengewinde
- 17a: Bremsbelag-Druckfläche
- 17b: Anlagefläche für das Druckstück
- 18: Hitzeschirmfläche
- 19: Ringspalt

## Patentansprüche

1. Scheibenbremse für ein Fahrzeug, mit einem ersten und zweiten Bremsbelag (2a, 2b) sowie einer dazwischen angeordneten Bremsscheibe (1) und einem die Bremsscheibe (1) übergreifenden Bremssattel mit einem Bremssattelgehäuse (6), in dem eine Zuspanneinrichtung angeordnet ist, wobei die Zuspanneinrichtung ein Druckstück (3) umfasst, welches gegen den ersten Bremsbelag (2a) zuspannbar ist, wobei ein Faltenbalg (5) zum Schutz des Inneren des Bremssattelgehäuses (6) gegen Verunreinigungen vorgesehen ist, wobei der Faltenbalg (5) mit einem ersten Endbereich (5a) an dem Bremssattelgehäuse (6) und mit einem zweiten Endbereich (5b) an einer Blechanordnung (7) aus einer Blechplatte (8) und einen koaxial dazu angeordneten sowie stoffschlüssig damit verbundenen Blechring (9) befestigt ist, wobei die Blechplatte (8) zwischen einer Stirnseite des Drückstücks (3) und dem ersten Bremsbelag (2a) angeordnet ist, wobei der Blechring (9) zwischen dem Faltenbalg (5) und dem Bremsbelag (2a) zum Schutz des Faltenbalgs (5) vor Wärmestrahlung, die durch Bremsvorgänge an den Bremsbelägen (2a, 2b) und der Bremsscheibe (1) generiert wird, angeordnet ist, **dadurch gekennzeichnet, dass** der Blechring (9) einen ringscheibenförmigen Abschnitt (9b) aufweist, welcher in radialer Verlängerung der Blechplatte (8) angeordnet ist und langlochförmig ausgebildete Aussparungen (11) zur Verringerung seiner Biegesteifigkeit aufweist, und dass die Aussparungen (11) in Umfangsrichtung gleichmäßig verteilt und aneinander angrenzend auf mindestens einer Kreisbahn an dem ringscheibenförmigen Abschnitt (9b) ausgebildet sind.

2. Scheibenbremse nach Anspruch 1, **dadurch gekennzeichnet, dass** der Blechring (9) einen zu dem ringscheibenförmigen Abschnitt (9b) einstückigen, zylindrischen Abschnitt (9a) aufweist, der im Wesentlichen senkrecht zu dem ringscheibenförmigen Abschnitt (9b) ausgebildet ist.

3. Scheibenbremse nach Anspruch 2, **dadurch gekennzeichnet, dass** der Blechring (9) mit dem zylindrischen Abschnitt (9a) einen Längsabschnitt des Druckstücks (3) umgibt.

4. Scheibenbremse nach Anspruch 2 oder 3, **dadurch gekennzeichnet, dass** der Faltenbalg (5) mittels eines Spannrings (12a) an dem zylindrischen Abschnitt (9a) des Blechrings (9) befestigt ist.

5. Scheibenbremse nach einem der Ansprüche 1 bis 4, **dadurch gekennzeichnet, dass** zwischen dem Faltenbalg (5) und dem ringscheibenförmigen Abschnitt (9b) an dem ringscheibenförmigen Abschnitt (9b) eine Scheibe (13) mit Antihaftwirkung angeordnet ist.

6. Scheibenbremse nach einem der Ansprüche 1 bis 5, **dadurch gekennzeichnet, dass** der ringscheibenförmige Abschnitt (9b) gegenüber der Blechplatte (8) axial in Richtung zu dem Faltenbalg (5) zurückversetzt angeordnet ist.

7. Blechanordnung (7) für eine Scheibenbremse eines Fahrzeugs, umfassend eine zentrale Blechplatte (8) und einen koaxial dazu angeordneten sowie stoffschlüssig damit verbundenen Blechring (9), wobei die Blechplatte (8) dazu vorgesehen ist, zwischen einer Stirnseite eines Drückstücks und einem Bremsbelag angeordnet zu sein, wobei der Blechring (9) dazu vorgesehen ist, zwischen einem Faltenbalg und dem Bremsbelag angeordnet zu sein und dem Schutz des Faltenbalgs vor Wärmestrahlung dient, **dadurch gekennzeichnet, dass** der Blechring (9) einen ringscheibenförmigen Abschnitt (9b) aufweist, welcher in radialer Verlängerung der Blechplatte (8) angeordnet ist und langlochförmig ausgebildete Aussparungen (11) zur Verringerung seiner Biegesteifigkeit aufweist, und dass die Aussparungen (11) in Umfangsrichtung gleichmäßig verteilt und aneinander angrenzend auf mindestens einer Kreisbahn an dem ringscheibenförmigen Abschnitt (9b) ausgebildet sind.

8. Blechanordnung nach Anspruch 7, **dadurch gekennzeichnet, dass** der Blechring (9) einen zu dem ringscheibenförmigen Abschnitt (9b) einstückigen, zylindrischen Abschnitt (9a) aufweist, der im Wesentlichen senkrecht zu dem ringscheibenförmigen Abschnitt (9b) ausgebildet ist.

9. Blechanordnung (7) nach einem der Ansprüche 7 oder 8, **dadurch gekennzeichnet, dass** an dem ringscheibenförmigen Abschnitt (9b) eine Scheibe (13) mit Antihaftwirkung angeordnet ist.

10. Blechanordnung (7) nach einem der Ansprüche 7 bis 9, **dadurch gekennzeichnet, dass** der ringscheibenförmige Abschnitt (9b) gegenüber der Blechplatte (8) axial in Richtung zu dem Faltenbalg zurückversetzt angeordnet ist.

## Claims

1. Disc brake for a vehicle, comprising a first and a second brake pad (2a, 2b) and a brake disc (1) arranged therebetween and a brake caliper which engages around the brake disc (1) and has a brake caliper housing (6) in which a brake application device is arranged, wherein the brake application device comprises a pressure piece (3) which can be applied to the first brake pad (2a), wherein a bellows (5) is provided for protecting the interior of the brake caliper housing (6) against contamination, wherein the bellows (5) is fastened to the brake caliper housing (6) by a first end region (5a) and is attached to a sheet metal arrangement (7) by a second end region (5b), which sheet metal arrangement consists of a sheet metal plate (8) and a sheet metal ring (9) which is arranged coaxially therewith and is integrally bonded thereto, wherein the sheet metal plate (8) is arranged between an end face of the pressure piece (3) and the first brake pad (2a), wherein the sheet metal ring (9) is arranged between the bellows (5) and the brake pad (2a) to protect the bellows (5) against heat radiation which is generated by braking operations by the brake pads (2a, 2b) and the brake disc (1), **characterized in that** the sheet metal ring (9) has an annular disc-shaped portion (9b) which is arranged in the radial extension of the sheet metal plate (8) and has slot-like cut-outs (11) for reducing its flexural rigidity, **and in that** the cut-outs (11) are uniformly distributed in the circumferential direction and are formed adjacently to one another on at least one circular path on the annular disc-shaped portion (9b).

2. Disc brake according to claim 1, **characterized in that** the sheet metal ring (9) has a cylindrical portion (9a) which is formed in one piece with respect to the annular disc-shaped portion (9b) and is formed substantially perpendicularly to the annular disc-shaped portion (9b).

3. Disc brake according to claim 2, **characterized in that** the sheet metal ring (9) surrounds a longitudinal portion of the pressure piece (3) by means of the cylindrical portion (9a).

4. Disc brake according to claim 2 or claim 3, **characterized in that** the bellows (5) is fastened to the cylindrical portion (9a) of the sheet metal ring (9) by means of a clamping ring (12a).

5. Disc brake according to any of claims 1 to 4, **characterized in that** a disc (13) having a non-stick effect is arranged on the annular disc-shaped portion (9b) between the bellows (5) and the annular disc-shaped portion (9b).

6. Disc brake according to any of claims 1 to 5, **characterized in that** the annular disc-shaped portion (9b) is arranged so as to be axially set back in the direction of the bellows (5) relative to the sheet metal plate (8).

7. Sheet metal arrangement (7) for a disc brake of a vehicle, comprising a central sheet metal plate (8) and a sheet metal ring (9) arranged coaxially therewith and integrally bonded thereto, wherein the sheet metal plate (8) is provided to be arranged between an end face of a pressure piece and a brake pad, wherein the sheet metal ring (9) is provided to be arranged between a bellows and the brake pad and is used to protect the bellows from heat radiation, **characterized in that** the sheet metal ring (9) has an annular disc-shaped portion (9b) which is arranged in the radial extension of the sheet metal plate (8) and has slot-like cut-outs (11) for reducing its flexural rigidity, **and in that** the cut-outs (11) are uniformly distributed in the circumferential direction and are formed adjacently to one another on at least one circular path on the annular disc-shaped portion (9b).

8. Sheet metal arrangement according to claim 7, **characterized in that** the sheet metal ring (9) has a cylindrical portion (9a) which is formed in one piece with respect to the annular disc-shaped portion (9b) and is formed substantially perpendicularly to the annular disc-shaped portion (9b).

9. Sheet metal arrangement (7) according to claim 7 or claim 8, **characterized in that** a disc (13) having a non-stick effect is arranged on the annular disc-shaped portion (9b).

10. Sheet metal arrangement (7) according to any of claims 7 to 9, **characterized in that** the annular disc-shaped portion (9b) is arranged so as to be axially set back in the direction of the bellows relative to the sheet metal plate (8).

## Revendications

1. Frein à disque pour un véhicule, avec une première et une deuxième garniture de frein (2a, 2b) ainsi qu'un disque de frein (1) disposé entre elles et un étrier de frein recouvrant le disque de frein (1) avec un boîtier d'étrier de frein (6) dans lequel est disposé un dispositif de serrage, dans lequel le dispositif de serrage comprend une pièce de pression (3), laquelle peut être serrée contre la première garniture de frein (2a), dans lequel un soufflet (5) est prévu pour protéger l'intérieur du boîtier d'étrier de frein (6) contre les impuretés, dans lequel le soufflet (5) est fixé avec une première zone d'extrémité (5a) au boîtier d'étrier de frein (6) et avec une deuxième zone d'extrémité (5b) à un agencement de tôles (7) constitué d'une plaque de tôle (8) et d'un anneau de tôle (9) disposé coaxialement à celle-ci et relié à celle-ci par liaison de matière, dans lequel la plaque de tôle (8) est disposée entre une face frontale de la pièce de pression (3) et la première garniture de frein (2a), dans lequel l'anneau de tôle (9) est disposé entre le soufflet (5) et la garniture de frein (2a) pour protéger le soufflet (5) contre le rayonnement thermique qui est généré par les processus de freinage sur les garnitures de frein (2a, 2b) et le disque de frein (1), **caractérisé en ce que** l'anneau de tôle (9) présente une section en forme de disque annulaire (9b), laquelle est disposée dans le prolongement radial de la plaque de tôle (8) et présente des évidements (11) réalisés en forme de trous oblongs pour réduire sa rigidité à la flexion, et **en ce que** les évidements (11) sont répartis uniformément dans la direction périphérique et réalisés de manière adjacente les uns aux autres sur au moins une trajectoire circulaire sur la section en forme de disque annulaire (9b).

2. Frein à disque selon la revendication 1, **caractérisé en ce que** l'anneau de tôle (9) présente une section cylindrique (9a) d'un seul tenant avec la section en forme de disque annulaire (9b), qui est formée sensiblement perpendiculairement à la section en forme de disque annulaire (9b) .

3. Frein à disque selon la revendication 2, **caractérisé en ce que** l'anneau de tôle (9) entoure avec la section cylindrique (9a) une section longitudinale de la pièce de pression (3).

4. Frein à disque selon la revendication 2 ou 3, **caractérisé en ce que** le soufflet (5) est fixé à la section cylindrique (9a) de l'anneau de tôle (9) au moyen d'un anneau de serrage (12a).

5. Frein à disque selon l'une quelconque des revendications 1 à 4, **caractérisé en ce qu'**un disque (13) à effet anti-adhérent est disposé entre le soufflet (5) et la section en forme de disque annulaire (9b) sur la section en forme de disque annulaire (9b).

6. Frein à disque selon l'une quelconque des revendications 1 à 5, **caractérisé en ce que** la section en forme de disque annulaire (9b) est disposée en retrait axial par rapport à la plaque de tôle (8) en direction du soufflet (5) .

7. Ensemble de tôle (7) pour un frein à disque d'un véhicule, comprenant une plaque de tôle centrale (8) et un anneau de tôle (9) disposé coaxialement à celle-ci et relié à celle-ci par une liaison de matière, dans lequel la plaque de tôle (8) est prévue pour être disposée entre une face frontale d'une pièce de pression et une garniture de frein, dans lequel l'anneau de tôle (9) est prévu pour être disposé entre un soufflet et la garniture de frein et sert à protéger le soufflet contre le rayonnement thermique, **caractérisé en ce que** l'anneau de tôle (9) présente une section en forme de disque annulaire (9b), laquelle est disposée dans le prolongement radial de la plaque de tôle (8) et présente des évidements (11) réalisés en forme de trous oblongs pour réduire sa rigidité à la flexion, et **en ce que** les évidements (11) sont répartis régulièrement dans la direction périphérique et réalisés de manière adjacente les uns aux autres sur au moins une trajectoire circulaire sur la section en forme de disque annulaire (9b).

8. Ensemble de tôle
selon la revendication 7, **caractérisé en ce que** l'anneau de tôle (9)
présente une section cylindrique (9a) d'un seul tenant avec la section en forme de disque annulaire (9b), qui est réalisée sensiblement perpendiculairement à la section en forme de disque annulaire (9b).

9. Ensemble de tôle (7) selon l'une quelconque des revendications 7 ou 8, **caractérisé en ce qu'**un disque (13) à effet anti-adhérent est disposé sur la section en forme de disque annulaire (9b).

10. Ensemble de tôle (7) selon l'une quelconque des revendications 7 à 9, **caractérisé en ce que** la section en forme de disque annulaire (9b) est disposée en retrait axial par rapport à la plaque de tôle (8) en direction du soufflet.
